# EUROPÄISCHE PATENTANMELDUNG

(11) **EP 1 972 484 A1**
(43) Veröffentlichungstag der Anmeldung: **24.09.2008**
(21) Anmeldenummer: 08005134.5
(22) Anmeldetag: 19.03.2008
(51) Int. Cl.: B60L 11/12, B60K 6/40, B60K 6/32

(54) **Elektro-Flurförderzeug mit mobiler Ladeeinheit**

(30) Priorität: 19.03.2007 DE 102007013699
(71) Anmelder: VOLK Fahrzeugbau GmbH, 88339 Bad Waldsee (DE)
(72) Erfinder: Baur, Matthias, Dr., 89075 Ulm (DE)
(74) Vertreter: Roth, Klaus

(57) **Zusammenfassung**

Es wird ein Elektro-Flurförderzeug, insbesondere Elektro-Fahrersitz-Zugmaschine und/oder Elektro-Fahrersitz-Plattformwagen, mit wenigstens einem im Elektro-Flurförderzeug fest verbauten elektrischen Antriebsmotor zum Antreiben wenigstens eines Laufrades des Elektro-Flurförderzeugs, wobei eine Traktionsbatterie zur Energieversorgung des Antriebsmotors vorgesehen ist, so dass ein rein elektrischer Betrieb des Elektro-Flurförderzeugs realisierbar ist, in dem die benötigte Antriebsenergie vollständig von der Traktionsbatterie beziehbar ist, vorgeschlagen, das dadurch gekennzeichnet ist, dass eine separate, vom Elektro-Flurförderzeug entfernbare Traktionsbatterie-Ladeeinheit wenigstens eine Brennstoff zelleneinheit zum Laden bzw. Versorgen der Traktionsbatterie mit elektrischer Energie umfasst, wobei wenigstens zwischen der Brennstoffzelleneinheit und der Traktionsbatterie eine lösbare Kupplungsvorrichtung vorgesehen ist.

## Beschreibung

Die Erfindung betrifft ein Elektro-Flurförderzeug gemäß dem Oberbegriff des Anspruchs 1.

### Stand der Technik

Auf Flughäfen werden Flurförderzeuge, insb. Fahrersitz-Zugmaschinen und Fahrersitz-Plattformwagen, eingesetzt, um das Gepäck der Passagiere von den Gepäckabfertigungsbereichen zum Flugzeug bzw. in umgekehrter Richtung zu transportieren. Entsprechende Flurförderzeuge werden häufig im durchgängigen Mehrschichtbetrieb (365 Tage im Jahr, 24 Stunden am Tag) eingesetzt. Ähnliche Einsatzbedingungen finden sich vielfach auch in der Industrie (z.B. in Automobil-, stahl-oder Aluminiumwerken), wo vergleichbare Flurförderzeuge zum Verziehen schwerer Lasten (z.B. Presswerkzeuge, Rohbauteile, Stahl- oder Aluminiumcoils) eingesetzt werden.

Erfahrungsgemäß werden diese Flurförderzeuge dabei durchschnittlich etwa 4 bis 6 Stunden pro Tag bewegt (entsprechend ca. 1.500 bis 2.000 Betriebsstunden pro Jahr), während die verbleibenden 18 bis 20 Stunden Leerlaufzeiten darstellen, z.B. Zeiten während des Wartens an der Parkposition von Flugzeugen und/oder während des Be- und Entladens von Anhängern.

Das Einsatzprofil auf Flughäfen ist zudem dadurch gekennzeichnet, dass es hier zum Einen auf dem Flughafen-Vorfeld weite Strecken zwischen dem Terminalgebäude und den Parkpositionen der Flugzeuge zurückzulegen gilt, während andererseits auch die Einfahrt in die geschlossenen, meist unterirdischen Gepäckabfertigungsbereiche im Inneren der Flughafengebäude erforderlich ist. Während letzteres mit einem reinen Diesel-Flurförderzeug aus Emissionsgründen kaum möglich wäre, eignen sich reine Elektro-Flurförderzeuge aufgrund ihrer begrenzten Batteriekapazität nur eingeschränkt für die Bewältigung weiter Strecken im Freien.

Aus diesem Grunde werden nach heutigem Stand der Technik häufig Flurförderzeuge bzw. Fahrersitz-Zugmaschinen und Fahrersitz-Plattformwagen mit sehr groß dimensionierten Traktionsbatterien und/oder mit einem diesel-elektrischen Antrieb eingesetzt. Bei letzteren erzeugt während des Dieselbetriebes im Freien ein vom Dieselmotor angetriebener Generator Strom, der in die Traktionsbatterien des Flurförderzeugs eingespeist wird. Da die Batterien folglich im Dieselbetrieb fortlaufend wieder aufgeladen werden, ist bei flughafentypischen Einsatzbedingungen (ca. 70 bis 80 Prozent Einsatz im Freien mit Dieselantrieb, ca. 20 bis 30 Prozent. Einsatz in geschlossenen Gebäuden mit Elektroantrieb) ein externes Aufladen der Batterien, z.B. in einer Batterieladestation, und/oder ein Wechseln der Batterien in der Regel nicht erforderlich.

Die heute im Einsatz befindlichen elektrischen oder diesel-elektrischen Fahrersitz-Zugmaschinen und Fahrersitz-Plattformwagen sind mit verschiedenen Nachteilen verbunden:
1. Elektroschlepper sind vor allem aus operativen Gründen weniger gut für den Dauereinsatz auf Flughäfen oder in der Industrie geeignet. Operative Probleme entstehen vor allem dadurch, dass sich die 8- bis 12-stündigen Batterieladevorgänge im durchgängigen Mehrschichtbetrieb nicht auf Neben- bzw. Brachzeiten verschieben lassen. Da die Fahrzeuge folglich während des Ladevorgangs nicht produktiv genutzt werden können, ist teilweise das Vorhalten van Ersatzfahrzeugen zur Abdeckung von Kapazitätsspitzen erforderlich. Um Elektrofahrzeuge auch während des Ladeprozesses weiterhin einsetzen zu können, werden von manchen Betreibern ein bis zwei Wechselbatterien pro Fahrzeug eingesetzt. Diese kosten in Abhängigkeit von der Batteriekapazität derzeit ca. 4.000 bis 5.000 Euro/Stück und erhöhen so das Investitionsvolumen pro Fahrzeug um rund 10 bis 30 Prozent.
   Aber selbst beim Einsatz von Wechselbatterien entstehen Ausfallzeiten. Diese resultieren zum Beispiel aus der An- und Abfahrt der Fahrzeuge von der Peripherie des Flughafen- bzw. Firmengeländes zur zentralen Batterieladestation oder aus dem Zeitbedarf für den Austausch der Batterie gegen eine Wechselbatterie. Zudem wird es in der Praxis immer wieder vergessen, Fahrzeuge bzw. Batterien aufzuladen, was dann in der darauf folgenden Schicht zum Ausfall des betreffenden Flurförderzeugs führt und unvorhergesehene Probleme bei der Einsatzplanung nach sich zieht.
   Da Batterieladestationen grundsätzlich so dimensioniert sein müssen, dass mehrere Fahrzeuge parallel geladen werden können, haben sie - in Abhängigkeit von der Flottengröße - teils beträchtliche Ausmaße. Auf dem Flughafen Amsterdam/Schiphol beispielsweise können rund 50 Elektrofahrzeuge zeitgleich geladen werden. Der entsprechende Raum hat eine Größe von ca. 500 bis 600 qm.
   Solche Batterieladestationen lassen sich aus operativen Gründen nur schwer an die Peripherie des weitläufigen Flughafengeländes verlagern, da dann die Fahrwege vom entgegen gesetzten Ende des Flughafens sehr weit werden, was gerade für Elektrofahrzeuge mit bereits weitgehend entladenen Batterien problematisch sein könnte. Aus diesem Grunde fällt der enorme Raumbedarf für Batterieladestationen typischerweise gerade dort an, wo die Nutzfläche am knappsten und folglich auch am teuersten ist: im Zentrum des Flughafenkomplexes. Flughafengesellschaften stellen derzeit den Fahrzeugbetreibern und/oder Abfertigungsgesellschaften daher alleine für die Bereitstellung dieser Flächen vielfach Jahresmieten im sechsstelligen Bereich in Rechnung. In einer mittelgroßen Ladestation entfallen zudem alleine auf die Anschaffung der Ladegeräte Investitionskosten in einer Höhe von ca. 100.000 bis 200.000 Euro. Für die Bereitstellung der benötigten 380 V-Starkstromanschlüsse fallen ebenfalls Einmalkosten in ähnlicher Höhe an.
2. Diesel-elektrisch betriebe Flurförderzeuge machen derartige Ladestationen überflüssig und sind auch operativ einfacher zu handhaben. Dennoch weisen auch sie zahlreiche Nachteile auf:
   a.) Diesel-elektrisch angetriebene Flurförderzeuge erzeugen im Dieselbetrieb schädliche Abgase, die selbst bei Verwendung von Dieselpartikelfiltern nicht vollständig abgesondert werden können. Vor allem aus diesem Grund muss der Dieselmotor während des Einsatzes im Gebäudeinneren stets ausgeschaltet werden. Dies bedeutet, dass nur der verbleibende Zeitanteil während des Fahrzeugbetriebs im Freien, also etwa 70 bis 80 Prozent der gesamten Betriebszeit, zum Laden der Batterien genutzt werden kann.
   b.) Des Weiteren sind diesel-elektrisch angetriebene Flurförderzeuge im Dieselbetrieb relativ laut, was sowohl aus Arbeitssicherheitsperspektive als auch insbesondere aus ergonomischen Gründen nachteilig ist. Aus diesem Grund schalten die Fahrer den Dieselmotor beispielsweise während des Be- und Entladens der Anhänger oder während des Wartens auf ein Flugzeug häufig aus. Die effektiv zum Laden der Batterien zur Verfügung stehende Zeit wird dadurch noch weiter verkürzt.
   Selbst während der Fahrt im Freien schalten die Fahrer den Dieselmotor nicht immer an, weil auch hier der diesellose Antrieb deutlich leiser und folglich angenehmer ist. Aus diesem Grund ist es mittlerweile bei vielen Herstellen von diesel-elektrisch angetriebenen Flurförderzeugen üblich geworden, die maximale Höchstgeschwindigkeit im Elektrobetrieb auf beispielsweise 10 bis 20 km/h zu reduzieren, um so für die Fahrer einen Anreiz zu schaffen, den Dieselmotor im Freien anzuschalten (denn dies erlaubt es ihnen, schneller zu fahren).
   Als Zwischenfazit ist daher festzuhalten, dass beim Einsatz von diesel-elektrisch angetriebenen Flurförderzeugen in der Praxis nur ein Bruchteil der gesamten Fahrzeugnutzungszeit effektiv zum Aufladen der Batterien genutzt wird, was sich negativ auf die Energiebilanz dieser Fahrzeuge auswirkt.
c.) Ein weiteres Problem bei diesel-elektrisch angetriebenen Flurförderzeugen besteht schließlich darin, dass die dieselmotorischen Antriebskomponenten reparaturanfällig sind und infolgedessen häufig zu Fahrzeugausfällen führen.

Eine Hybrid-Fahrersitzzugmaschine der Anmelderin gemäß der EP 1329351 B1 konnte von den dargestellten Nachteilen nur den zuletzt genannten beseitigen. Der Vorteil dieses Schleppers bzw. die Lehre dieser Druckschrift ist, dass ein Austausch des wartungsintensiven Dieselmotors schnell erfolgen kann und infolgedessen lange wartungs- und/oder reparaturbedingte Stillstandzeiten vermieden werden können. Hierzu können beispielsweise bei einer Flotte von Fahrzeugen ein oder mehrere Ersatzaggregate vorgehalten werden.

Aufgrund der technologieimmanenten Nachteile eines dieselmotorischen Antriebs - insbesondere Lärm- und Abgasemissionen - kann aber auch bei dieser Hybrid-Fahrersitzzugmaschine in der Praxis nur ein vergleichsweise kleiner Teil der gesamten Einsatzzeit zum Aufladen der Batterien genutzt werden. Es muss deshalb im Praxisbetrieb zwingend immer mindestens ein Dieselaggregat pro Fahrzeug vorhanden sein.

### Aufgabe und Vorteile der Erfindung

Aufgabe der vorliegenden Erfindung ist es demgegenüber ein Elektro-Flurförderzeug, insbesondere Elektro-Fahrersitz-Zugmaschine und/oder Elektro-Fahrersitz-Plattformwagen, mit wenigstens einem im Elektro-Flurförderzeug fest verbauten elektrischen Antriebsmotor zum Antreiben wenigstens eines Laufrades des Elektro-Flurförderzeugs, wobei wenigstens eine Traktionsbatterie zur Energieversorgung des Antriebsmotors vorgesehen ist, so dass ein rein elektrischer Betrieb des Elektro-Flurförderzeugs realisierbar ist, in dem die benötigte Antriebsenergie vollständig von der Traktionsbatterie beziehbar ist, vorzuschlagen, das kostengünstig und nahezu ohne Unterbrechung betrieben werden kann.

Dies wird dadurch erreicht, dass eine separate, vom Elektro-Flurförderzeug entfernbare Traktionsbatterie-Ladeeinheit wenigstens eine Brennstoffzelleneinheit zum Laden bzw. Versorgen der Traktionsbatterie mit elektrischer Energie umfasst, wobei wenigstens zwischen der Brennstoffzelleneinheit und der Traktionsbatterie eine lösbare Kupplungsvorrichtung bzw. Verbindung vorgesehen ist.

Mit Hilfe der erfindungsgemäßen Traktionsbatterie-Ladeeinheit kann beispielsweise eine leere Traktionsbatterie während der Fahrt sowohl im freien Gelände (outdoor) als auch innerhalb geschlossener Räume (indoor) aufgeladen werden. Dies ist deshalb möglich, weil Brennstoffzellen keine oder nur sehr geringe Abgasemissionen aufweisen. Da Brennstoffzellen zudem weitgehend geräuschlos sind, kann auch eine Verschlechterung der Energiebilanz durch Incompliance der Fahrer ausgeschlossen werden: Anders als beispielsweise bei einem dieselelektrischen Antrieb muss nicht befürchtet werden, dass die Fahrer die Brennstoffzelle - beispielsweise aus Gründen der Gerauschbelästigung - ausschalten und so das Wiederaufladen der Traktionsbatterien verzögern bzw. erschweren.

Daher ist eine besonders schnelle Ladung der Traktionsbatterie gewährleistbar bzw. möglich. Gerade die Kombination mit der vorteilhaften Kupplungsvorrichtung ermöglicht, dass die Traktionsbatterie-Ladeeinheit leicht bzw. schnell von einem ersten Slektro-Flurfördezeug auf ein zweites Elektro-Flurförderzeug transferiert bzw. gewechselt werden kann. Entsprechend kann eine einzige Traktionsbatterie-Ladeeinheit für zwei oder mehr Elektro-Flurförderzeuge verwendbar sein.

Dies führt zu einer enormen Einsparung an Kosten, z.B. durch die erhebliche Reduzierung der Anzahl an Traktionsbatterie-Ladeeinheiten in Bezug zur Anzahl der Elektro-Flurförderzeuge, durch die Einsparung von Mietausgaben für den Stellplatz von stationären Ladeeinheiten, etc..

Gemäß der Erfindung wird es erst wirtschaftlich möglich, in der Praxis bzw. alltagstauglich (d.h. ohne enorme Subventionierungen) Brennstoffzellen in Flurförderzeugen einzusetzen. Derzeit sind gerade Brennstoffzellen noch sehr teuer. Hier setzt die Erfindung an und löst diese Anfangsproblematik der Brennstoffzellentechnologie und ermöglicht somit einen Durchbruch bei der Markteinführung von Brennstoffzellen.

Ein beliebiger Austausch bzw. Wechsel einer oder mehrerer Traktionsbatterie-Ladeeinheiten mit mehreren Elektro-Flurförderzeugen ist erfindungsgemäß möglich. Zum Beispiel können gemäß der Erfindung ca. 10 Traktionsbatterie-Ladeeinheiten in einem Fuhrpark von ca. 20 bis 50 Elektro-Flurförderzeugen vorteilhaft eingesetzt werden und insbesondere einen durchgehenden Betrieb des gesamten Fuhrparks gewährleisten.

Bei der operativen Abwicklung des Austauschs der Traktionsbatterie-Ladeeinheiten zwischen mehreren Fahrzeugen einer Flotte kann an neuere technologische Entwicklungen im Bereich des Flotten- bzw. Fuhrparkmanagements in Flughäfen bzw. in der Industrie angeknüpft werden: Hier kommen in jüngster Zeit vermehrt Telemetriedatensysteme oder dergleichen zum Einsatz, die dadurch gekennzeichnet sind, dass vorzugsweise alle Fahrzeuge einer Flotte ständig drahtlos bzw. per Funk Daten, wie z.B. den Ladezustand ihrer Batterie, den Tank-Füllstand, Motoröl-Füllstände, Betriebstemperaturen etc., insbesondere an einen zentralen Leitstand oder dergleichen übermitteln. Zudem verfügen die Fahrzeuge teilweise über ein GPS-System etc., welches entsprechende Positionsdaten übermittelt.

Wenn die Zentrale dabei in vorteilhafter Weise weiß, wo z.B. sich die einzelnen Flurförderzeuge befinden, wie voll z.B. jeweils deren Batterie ist und ob sie z.B. eine mobile Traktionsbatterie-Ladeeinheit mitführen, dann ist es möglich, den Austausch der mobilen Traktionsbatterie-Ladeeinheit gemäß der Erfindung beispielsweise in einer Art Rendezvous-Verfahren zu koordinieren: Dabei werden vorzugsweise ein vollgeladenes Fahrzeug mit mobiler Traktionsbatterie-Ladeeinheit und ein Flurförderzeug mit weitgehend entladener Batterie ohne mobile Traktionsbatterie-Ladeeinheit zum Austausch zusammengeführt. Hierbei kann beispielsweise lediglich von Hand und/oder unter Zuhilfenahme von Hilfssystemen wie Elektromotoren und/oder Hydraulikvorrichtungen oder dergleichen und/oder Schienenvorrichtungen oder dergleichen z.B. ohne Kran oder Gabelstapler etc. ein Austausch bzw. ein Transfer der Traktionsbatterie-Ladeeinheit vom ersten auf das zweite Flurförderzeug erfolgen.

Bei der Auswahl der betreffenden Flurförderzeuge kann in vorteilhafter Weise versucht werden, die zurückzulegenden Fahrwege zu minimieren. Randbedingung bei dieser Optimierungsaufgabe ist insbesondere, ob die Fahrer aktuell bzw, in einem in Hinblick auf den Austausch relevanten Zeitfenster Fahraufträge abzuwickeln haben oder nicht. Auch dies ist in der Leitzentrale in der Regel bekannt, da diese Fahraufträge heute schon oft über so genannte Dispatching-Systeme oder Fahrer-Informationssysteme drahtlos bzw. per Funk an die Fahrzeuge übermittelt und dort meist auf einem Monitor in der Fahrerkabine dargestellt werden.

Bei einem Austausch der mobilen Traktionsbatterie-Ladeeinheit gemäß der Erfindung im Rendezvous-Verfahren könnten unter anderem nicht nur die Raumkosten der Batterieladestationen gänzlich gespart werden (weil die mobilen Ladegeräte immer von einzelnen Fahrzeugen mitgeführt werden), sondern zudem auch unnötige Fahrwege drastisch reduziert werden (weil sich die Fahrzeuge dezentral zum Austausch der mobilen Ladeeinheiten treffen können).

Zudem ist in Elektro-Flurförderzeugen, insbesondere in Fahrersitz-Zugmaschinen und Fahrersitz-Plattformwagen, der Einsatz einer Brennstoffzelle in Kombination mit einer groß dimensionierten Traktionsbatterie vorteilhaft, welche es erlaubt, das Flurförderzeug über längere Zeiträume und Strecken hinweg uneingeschränkt als reines Elektro-Flurförderzeug sowohl outdoor als auch indoor einzusetzen.

Als Gradmesser für die Größe der Traktionsbatterie wird der Quotient vorgeschlagen, der sich ergibt, wenn die Nominalkapazität der Batterie bei 5-stündiger Entladung und 20°C Umgebungstemperatur in Relation zur Leistungsaufnahme des elektrischen Antriebsmotors bei 5-stündigem Dauerbetrieb mit Nominalleistung in 20°C Umgebungstemperatur gesetzt wird. Wenn im Folgenden von einer groß dimensionierten Batterie die Rede ist, so sollen im Allgemeinen damit Batterien bzw. Akkumulatoren bezeichnet werden, bei denen dieser Quotient wenigstens 40 Prozent, besser jedoch 50 bis 60 Prozent und mehr beträgt. Bei Verwendung einer groß dimensionierten Batterie in diesem Sinne kann ein Elektrofahrzeug je nach Einsatzbedingungen beispielsweise rund die Hälfte der täglichen Nettobetriebszeit von ca. 4 bis 6 Stunden rein batterieelektrisch betrieben werden.

Die Verwendung einer groß dimensionierten Batterie in diesem Sinne in Kombination mit einer Brennstoffzelle bietet gerade bei flughafentypischen Einsatzprofilen - die u.a. gekennzeichnet sind durch (a.) 24-stündigen Dauerbetrieb, (b.) einen überproportionalen Anteil von Leerlaufzeiten an der gesamten Nutzungszeit und (c.) eine starke Ballung bzw.

Konzentration der Einsatzzeiten in bestimmten Tagesabschnitten - große Vorteile:

So ist es auch möglich, die Brennstoffzelle bzw. den Brennstoffzellen-Stack z.B. nahezu 24 Stunden am Tag durchlaufen zu lassen und so die Leerlaufzeiten des Flurförderzeugs optimal zur Aufladung der Batterien zu nutzen. Beim harten Dauereinsatz des Flurförderzeugs, beispielsweise während der verkehrsstarken Zeiten in den Morgen- und Abendstunden, kann eine negative Energiebilanz des Flugförderzeugs über einen längeren Zeitraum aus den Batterien überbrückt werden. Der Einsatz einer mobilen Traktionsbatterie-Ladeeinheit in Kombination mit einer groß dimensionierten Traktionsbatterie eröffnet daher in vorteilhafter Weise die Möglichkeit des "Downsizings" der Brennstoffzelle: Bei der skizzierten Bedingungskonstellation muss die Dimensionierung der Brennstoffzelle nicht an der Maximalleistung des Elektromotors ausgerichtet werden. Sie kann vielmehr deutlich kleiner ausgeführt werden. Bei einem Defekt der Brennstoffzelle ist es zudem möglich, das Flurförderzeug über längere Zeiträume hinweg und ohne funktionelle Einschränkungen als Elektro-Flurförderzeug weiterzubetreiben.

Der zuletzt genannte Vorteil ist vor allem dann gegeben, wenn die gesamte Traktionsbatterie-Ladeeinheit bzw. das gesamte Brennstoffzellenmodul leicht abnehmbar und/oder austauschbar ist, beispielsweise mittels eines Krans oder dergleichen. Vorteilhafterweise kann die Traktionsbatterie-Ladeeinheit bzw. das Brennstoffzellenmodul in einen separaten Tragrahmen, ein Gestell oder ähnliches montiert sein, welches insbesondere wenigstens ein Befestigungselement zum Befestigen an einer Hebevorrichtung aufweisen kann (z.B. eine Öse oder ähnliches).

Vorteilhafterweise kann zudem am Flurförderzeugrahmen und/oder an der Traktionsbatterie-Ladeeinheit wenigstens ein leicht lösbares Fixierelement vorgesehen werden, mit welchem die Traktionsbatterie-Ladeeinheit im Flurförderzeug fixiert wird. Des Weiteren kann das Flurförderzeug vorteilhafterweise über wenigstens eine Aufnahmevorrichtung zum Aufnehmen eines Sockelelements des Tragrahmens verfügen. Die Aufnahmevorrichtung kann dabei vorteilhafterweise über wenigstens ein Führungselement verfügen.

Um einen problemlosen Austausch zu ermöglichen, kann die Verbindung zwischen der Traktionsbatterie-Ladeeinheit und der Traktionsbatterie lösbar sein. Vorteilhafterweise kann zudem eine weitere lösbare Verbindung zwischen der Traktionsbatterie-Ladeeinheit und dem Flurförderzeug vorgesehen werden, um beispielsweise Informationen über den Füllstand des Tanks, die Betriebstemperatur der Brennstoffzelle oder ähnliches nach außen zu führen, um so entsprechende Anzeigeinstrumente in der Fahrerkabine zu ermöglichen und/oder diese Informationen als Telemetriedaten an eine Einsatzzentrale zu übermitteln.

Des Weiteren kann vorteilhafterweise eine weitere lösbare Verbindung vorgesehen werden, mittels der das Brennstoffzellenmodul von der Fahrerkabine ein- und ausgeschaltet werden kann. Vorteilhafterweise kann eine weitere lösbare Verbindung zwischen der Fahrsteuerung des Flurförderzeugs und der Brennstoffzellensteuerung vorgesehen werden, mittels derer Flurförderzeugsteuerung und Brennstoffzellensteuerung miteinander verbunden werden. Vorteilhafterweise könnten zudem wenigstens zwei der vorgenannten Verbindungen in einem Schnittstellenstecker zusammengeführt werden.

Gemäß der Erfindung können mittels des Brennstoffzellenantriebs vergleichsweise große Strecken problemlos überwunden werden. Betankungsvorgänge mit Wasserstoff, Methanol, zu reformierenden Kohlenwasserstoffen wie Benzin oder Diesel oder anderen Energieträgern sind in relativ kurzer Zeit möglich. Möglicherweise sind zudem separat austauschbare Energiespeicher, insb. Batterien bzw. Akkus und/oder Brennstoff- (für Methanol-, Wasserstoff der BZ etc.) und/oder Kraftstoffspeicher (für Kohlenwasserstoffe wie Benzin, Methanol, etc. für die Reformierung) vorgesehen. Entsprechend können auch z.B. volle Ersatzspeicher schnell eingebaut bzw. gewechselt werden, so dass das Fahrzeug nicht lange für den Betankungsvorgang warten muss.

Gegenüber dem Stand der Technik können durch ein erfindungsgemäßes Elektro-Flurförderzeug, insb. mittels vorteilhafter Ausführungsvarianten, unter anderem nachfolgend aufgeführte Vorteile realisiert werden:
1. Kostenersparnis durch die Möglichkeit der gemeinsamen Nutzung von mobilen Traktionsbatterie-Ladeeinheiten durch mehrere Fahrzeuge.
   Gerade in der Anfangszeit, während derer die Kosten von Brennstoffzellen noch prohibitiv hoch sind, kann deren wirtschaftlicher Einsatz in Flurförderzeugen dadurch ermöglicht werden, dass eine mobile Traktionsbatterie-Ladeeinheit jeweils von zwei oder mehr Fahrzeugen einer Fahrzeugflotte gemeinsam bzw. abwechselnd genutzt wird. Dies ermöglicht die anteilige Umlegung der Investitionskosten für eine mobile Traktionsbatterie-Ladeeinheit auf mehrere Fahrzeuge. Hohe Raummieten, wie sie bei einer stationären Ladestation für Elektro-Flurförderzeuge üblich sind, können dabei vermieden werden. Wird der Austausch bzw. der Transfer der mobilen Traktionsbatterie-Ladeeinheiten in vorteilhafter Weise zentral koordiniert, beispielsweise in einer Art Rendezvous-Verfahren, so können zudem unnötige Wegstrecken vermieden werden. Besonders vorteilhaft ist es hierbei, wenn die mobile Traktionsbatterie-Ladeeinheit so gestaltet ist, dass deren Austausch bzw. der Transfer von einem Fahrzeug zum anderen problemlos und idealerweise ohne zusätzliche Hilfsmittel von den Fahrern selbst vollzogen werden kann, beispielsweise durch eine Lagerung auf Schienen sowie ggfs. einen elektrischen und/oder hydraulischen Hilfsantrieb.
2. Kostenersparnis und längere Lebensdauer durch die Möglichkeit des "Downsizings" der Brennstoffzelle
   Da bei einem erfindungsgemäßen Fahrzeug längere Leerlaufphasen optimal genutzt werden können, um die Traktionsbatterien wieder aufzuladen, und die groß dimensionierten Traktionsbatterien zugleich auch die Überbrückung längerer Zeiträume mit hoher Leistungsanforderung ermöglichen, muss sich die Dimensionierung der Brennstoffzelle nicht an der Maximalleistung des Elektromotors orientieren. Sie kann daher deutlich kleiner ausgeführt werden.
   Bei den gegenwärtigen Brennstoffzellen-Kosten von mehreren tausend Euro pro Kilowatt Leistung bedeutet der verringerte Leistungsbedarf eine erhebliche Kostenersparnis.
   Das Downsizing der Brennstoffzelle bringt zudem Vorteile bei der Versorgung der Brennstoffzelle mit Brennstoff. Teure Mehrtanksysteme und komplizierte Regelungen zur leistungsabhängigen Zuschaltung weiterer Brennstofftanks, durch die der Brennstoffzelle bei kurzzeitigen Spitzenbelastungen eine erhöhte Brennstoffmenge zugeführt werden kann, sind nicht erforderlich.
3. Vermeidung von Kaltstartproblemen und resultierenden Beschädigungen der Brennstoffzelle bei niedrigen Temperaturen
   Wird die Brennstoffzelle entsprechend der Erfindung im Dauerbetrieb eingesetzt, so können Kaltstartprobleme und resultierende Beschädigungen der Brennstoffzelle vermieden werden. Diese treten bei Brennstoffzellen entsprechend des Stands der Technik dann auf, wenn bei niedrigen Temperaturen Wasser in der Brennstoffzelle gefriert. Die Eisbildung behindert die Ingangsetzung der elektrochemischen Reaktionsprozesse in der Brennstoffzelle und kann schlimmstenfalls zu einer dauerhaften Beschädigung der Brennstoffzelle führen.
   Wird die Brennstoffzelle dagegen mit einer ausreichend großen Traktionsbatterie kombiniert, so kann sie in vorteilhafter Weise (fast bzw. möglichst) im Dauerbetrieb eingesetzt werden. Dadurch wird insbesondere fortlaufend chemische Reaktionswärme erzeugt und/oder die Brennstoffzelle bzw. den Brennstoffzellen-Block und/oder weitere Brennstoffzellen-Brennstoffspeicher etc. in vorteilhafter Weise auf oder nahe der Betriebstemperatur hält und/oder ein Gefrieren des Wassers selbst bei sehr niedrigen Temperaturen verhindert. Hält man sich vor Augen, dass die Betriebstemperatur von Brennstoffzellen oft 70°C und mehr beträgt, so ist selbst bei einem vorübergehenden Ausschalten der Brennstoffzelle, beispielsweise während der rund 5-stündigen Betriebsunterbrechung während eines Nachtflugverbots (meist zwischen 0.00 Uhr und 05.00 Uhr), in der Regel nicht mit einer Eisbildung in der Brennstoffzelle zu rechnen.
   Sollte dies in Ausnahmefällen dennoch der Fall sein, so kann das Flurförderzeug dennoch ausreichend lange batterieelektrisch betrieben werden, bis die Brennstoffzelle hinreichend aufgewärmt ist, beispielsweise über eine vorzugsweise aus der Traktionsbatterie gespeiste elektrische Heizung und/oder durch die Nutzung von Abwärme.
4. Vermeidung von Überlastungsschäden an der Brennstoffzelle Elektromotoren können im Kurzzeitbetrieb, etwa für eine Dauer von fünf Minuten, ein Vielfaches ihrer Nominalleistung erbringen. Kennzeichnend für den Zugmaschineneinsatz ist, dass die maximale Leistungsanforderung des Elektromotors hier in der Regel nicht nur kurzzeitig, etwa beim Beschleunigen, sondern häufig über längere Zeiträume von mehreren Minuten kontinuierlich anliegt, beispielsweise beim Ziehen schwerer Lasten von bis zu 40 Tonnen. Da beispielsweise Kondenstoren oder Batterien mit kleiner Kapazität hierbei sehr schnell entladen werden, kann die vorübergehend sehr hohe Leistungsaufnahme des Elektromotors zur Überschreitung der maximalen Leistung der Brennstoffzelle und infolgedessen zu deren Beschädigung führen. Generell führen starke Schwankungen in der Leistungsabgabe zu einer verkürzung der Lebensdauer der Brennstoffzelle, da sie entsprechende thermische Schwankungen nach sich ziehen.
   Bei einem erfindungsgemäßen Flurförderzeug tritt dieses Problem im Regelfall nicht ein, da die Brennstoffzelle durch eine ausreichend dimensionierte Traktionsbatterie in vorteilhafter Weise vom Antriebsmotor entkoppelt wird: Der Antriebsmotor bezieht seine Energie stets aus der Traktionsbatterie; unabhängig hiervon speist die Brennstoffzelle eine weitgehend kontinuierliche Dauerleistung in die Traktionsbatterie ein.
   Probleme sind bei einem erfindungsgemäßen Flurförderzeug lediglich dann zu erwarten, wenn die Traktionsbatterie tiefentladen ist, beispielsweise aufgrund eines defekten Ladereglers oder aufgrund eines außergewöhnlich harten Dauereinsatzes mit überwiegend negativer Energiebilanz. In diesem Fall schlägt die Leistungsanforderung des elektrischen Antriebsmotors in vollem Maße auf die Brennstoffzelle durch, so dass eine Beschädigung - gerade wegen des Downsizings - wahrscheinlich sein könnte.
   In einem erfindungsgemäßen Flurförderzeug ist entsprechend eine vorteilhafte Regelung vorgesehen, die die Leistung des Antriebsmotors vorzugsweise in Abhängigkeit vom Ladezustand der Traktionsbatterien drosselt, etwa indem die maximal zulässige Geschwindigkeit und/oder die maximal zulässige Beschleunigung limitiert wird. Eine derartige Regelung wurde bereits in der DE 10 2004 044 263 A1 der Anmelderin offenbart.
5. Höhere Flurförderzeugverfügbarkeit durch Überbrückung von Ausfallzeiten
   Brennstoffzellen sind hochkomplexe Systeme. Nach heutigem Stand der Technik sind sie daher noch vergleichsweise fehleranfällig und können immer wieder ausfallen. Zudem sollten Brennstoffzellen nach heutigem Stand der Technik ca. alle 3.000 bis 5.000 Betriebsstunden beim Hersteller generalüberholt werden. Im Dauerbetrieb der Brennstoffzelle wird diese Betriebsstundenzahl z.B. nach ca. 125 bis 200 Tagen erreicht, so dass bis zu drei mal jährlich eine Generalüberholung der Brennstoffzelle erforderlich werden könnte.
   In diesem Fall kann ein erfindungsgemäßes Flurförderzeug, das mit einer ausreichend dimensionierten Traktionsbatterie ausgerüstet ist, vorübergehend auch als reiner Elektroschlepper weiterbetrieben werden und bei Bedarf z.B. an einer stationären Batterieladestatzon wieder aufgeladen werden.
   Besonders vorteilhaft ist dies dann, wenn ein erfindungsgemäßes Flurförderzeug modular aufgebaut ist, so dass das Brennstoffzellenmodul relativ einfach vom Flurförderzeug entfernt werden kann.
6. Vermeidung von marktseitigen Abwarteblockaden in der Übergangsphase zum Brennstoffzellenantrieb.
   Diskontinuierliche Technologieübergänge sind oft von hoher Unsicherheit begleitet, die sich in einem paradoxen Kundenverhalten äußert: Einerseits führt das mangelnde Vertrauen der Kunden in die neue Technik zu einer Abwartehaltung, die zur Folge hat, dass sich die "neue" Technologie erst verzögert im Markt durchsetzt. Umgekehrt sind Kunden aber ab einem bestimmten Zeitpunkt auch nicht mehr bereit, in die "alte" Technologie zu investieren.
   Zur Auflösung solcher "Abwartblockaden" ist es vorteilhaft, wenn den Kunden eine Upgrading- oder Downgrading-Option für die von ihnen erworbenen Flurförderzeuge angeboten werden kann. Dies ist dann möglich, wenn das Flurförderzeug zum einen auch als reiner Elektroschlepper betrieben werden kann und zum anderen die Brennstoffzelleneinheit modular aufgebaut und leicht abnehmbar ist.
   Beim Vorliegen dieser beiden Voraussetzungen ist es möglich, dass Flurförderzeuge, die heute als reine Elektro-Fahrersitz-Zugmaschinen oder Elektro-Fahrersitz-Plattformwagen erworben werden, zu einem späteren Zeitpunkt durch die Montage einer Traktionsbatterie-Ladeeinheit zu einem Brennstoffzellen-Flurförderzeug aufgerüstet werden können.
   Die Kunden, die der Brennstoffzellentechnologie aufgrund fehlender Langzeiterfahrungen noch skeptisch gegenüberstehen, haben dadurch die Möglichkeit, die neue Technologie mit begrenztem Risiko zu testen. So ist es zum Beispiel möglich, für eine größere Flotte von Elektrofahrzeugen zunächst nur eine Traktionsbatterie-Ladeeinheit anzuschaffen, welche zwischen den Fahrzeugen ausgetauscht wird. Die bestehende Ladestation-Infrastruktur kann dabei anfangs noch weitergenutzt werden, um Fahrzeuge auch stationär zu laden. In dem Maße wie sich die neue Technologie im Alltagsbetrieb bewährt, ist es möglich, die Anzahl der mobilen Traktionsbatterie-Ladeeinheiten zu einem späteren Zeitpunkt sukzessive zu erhöhen.
7. Das hohe Gewicht einer groß dimensionierten Traktionsbatterie ist bei Flurförderzeugen bzw. Zugmaschinen kein Nachteil, sondern ein Vorteil.
   Um die erforderliche Traktion zum Schleppen und vor allem zum Bremsen schwerer Lasten (von z.B. bis zu 40 Tonnen) gewährleisten zu können, müssen Zugmaschinen über eine entsprechend hohes Eigengewicht verfügen. Aus diesem Grunde verfügen sie unter anderem über zum Teil zentimeterdicke Stahlrahmen. Das vergleichsweise hohe Eigengewicht einer groß dimensionierten Traktionsbatterie ist daher beim Einsatz in Fahrersitz-Zügmaschinen keineswegs ein Nachteil. Es erlaubt vielmehr den Verzicht auf zum Teil tonnenschwere Zusatzgewichte im Fahrzeugrahmen.

## Patentansprüche

1. Elektro-Flurförderzeug, insbesondere Elektro-FahrersitzZugmaschine und/oder Elektro-Fahrersitz-Plattformwagen, mit wenigstens einem im Elektro-Flurförderzeug fest verbauten elektrischen Antriebsmotor zum Antreiben wenigstens eines Laufrades des Elektro-Flurförderzeugs, wobei wenigstens eine Traktionsbatterie zur Energieversorgung des Antriebsmotors vorgesehen ist, so dass ein rein elektrischer Betrieb des Elektro-Flurförderzeugs realisierbar ist, in dem die benötigte Antriebsenergie vollständig von der Traktionsbatterie beziehbar ist, **dadurch gekennzeichnet, dass** eine separate, vom Elektro-Flurförderzeug entfernbare Traktionsbatterie-Ladeeinheit wenigstens eine Brennstoffzelleneinheit zum Laden bzw. Versorgen der Traktionsbatterie mit elektrischer Energie umfasst, wobei wenigstens zwischen der Brennstoffzelleneinheit und der Traktionsbatterie eine lösbare Kupplungsvorrichtung vorgesehen ist.

2. Elektro-Flurförderzeug nach Anspruch 1, **dadurch gekennzeichnet, dass** die Kupplungsvorrichtung als Steck-Kupplungsvorrichtung mit wenigstens einem Stecker und einer Buchse ausgebildet ist.

3. Elektro-Flurförderzeug nach einem der vorgenannten Ansprüche, **dadurch gekennzeichnet, dass** die Kupplungsvorrichtung als Energie- und/oder Steuer-Kupplung zum Verkuppeln von Energie- und /oder Steuerleitungen ausgebildet ist.

4. Elektro-Flurförderzeug nach einem der vorgenannten Ansprüche, **dadurch gekennzeichnet, dass** die Kupplungsvorrichtung wenigstens eine Verbindungsleitung zum elektrischen Verbinden der Traktionsbatterie mit der Brennstoffzelleneinheit umfasst.

5. Elektro-Flurförderzeug nach einem der vorgenannten Ansprüche, **dadurch gekennzeichnet, dass** eine lösbare Verbindung zwischen der Brennstoffzelleneinheit und dem Elektro-Flurförderzeug vorgesehen ist, um Betriebsdaten des Brennstoffzellenmoduls (z.B. Füllstand des Tanks, Betriebstemperatur o.ä.) zu übermitteln und/oder um die Brennstoffzelle einzuschalten, auszuschalten und/oder zu regulieren.

6. Elektro-Flurförderzeug nach einem der vorgenannten Ansprüche, **dadurch gekennzeichnet, dass** eine lösbare Verbindung zwischen der Traktionsbatterie-Ladeeinheit und dem Elektro-Flurförderzeug vorgesehen ist, um einen Datenaustausch zwischen Brennstoffzellensteuerung und Flurförderzeugsteuerung zu ermöglichen.

7. Elektro-Flurförderzeug nach einem der vorgenannten Ansprüche, **dadurch gekennzeichnet, dass** wenigstens zwei lösbare Verbindungen und/oder Kupplungsvorrichtungen in einem gemeinsamen Schnittstellenstecker zusammengefasst sind.

8. Elektro-Flurförderzeug nach einem der vorgenannten Ansprüche, **dadurch gekennzeichnet, dass** die Traktionsbatterie-Ladeeinheit einen separaten Tragrahmen umfasst.

9. Elektro-rlurförderzeug nach einem der vorgenannten Ansprüche, **dadurch gekennzeichnet, dass** die Brennstoffzelle vibrationsmindernd vom Chassis entkoppelt ist, z.B. durch Federelemente, Gummipuffer, Stossdämpfer o.ä.

10. Elektro-Flurförderzeug nach einem der vorgenannten Ansprüche, **dadurch gekennzeichnet, dass** wenigstens eine Aufnahmevorrichtung zum Aufnehmen des Tragrahmens vorgesehen ist.

11. Elektro-Flurförderzeug nach einem der vorgenannten Ansprüche, **dadurch gekennzeichnet, dass** die Aufnahmevorrichtung wenigstens ein Führungselement und/oder eine Führungsschiene umfasst.

12. Elektro-Flurförderzeug nach einem der vorgenannten Ansprüche, **dadurch gekennzeichnet, dass** wenigstens ein Fixierelement zum Fixieren der Traktionsbatterie-Ladeeinheit vorgesehen ist.

13. Elektro-Flurförderzeug nach einem der vorgenannten Ansprüche, **dadurch gekennzeichnet, dass** die Traktionsbatterie-Ladeeinheit wenigstens ein Befestigungselement zum Befestigen an einer Hebevorrichtung aufweist.

14. Elektro-Flurförderzeug nach einem der vorgenannten Ansprüche, **dadurch gekennzeichnet, dass** die Traktionsbatterie-Ladeeinheit wenigstens eine Verstellvorrichtung, insbesondere Schienen oder dergleichen, zum Verstellen, insbesondere seitlich bzw. entgegen der Fahrtrichtung, aufweist.

15. Elektro-Flurförderzeug nach Anspruch 14, **dadurch gekennzeichnet, dass** die Verstellvorrichtung bzw. die Schienen teleskopierbar sind.

16. Elektro-Flurförderzeug nach Anspruch 14 und/oder 15, **dadurch gekennzeichnet, dass** das Verstellen der Traktionsbatterie-Ladeeinheit durch einen elektrischen und/oder hydraulischen Hilfsantrieb unterstützbar ist.

17. Elektro-Flurförderzeug nach Anspruch 14, 15 und/oder 16, **dadurch gekennzeichnet, dass** die Verstellvorrichtung bzw. Schienen zweier Elektro-Flurförderzeug zueinander kompatibel und/oder kraft- und/oder formschlüssig miteinander verbindbar sind.

18. Elektro-Flurförderzeug nach Anspruch 14, 15, 16 und/oder 17, **dadurch gekennzeichnet, dass** die Fixierung der Traktionsbatterie-Ladeeinheit auf dem Fahrzeug erst gelöst werden kann, wenn dessen Verstellvorrichtung bzw. Schienen kraft- und/oder formschlüssig mit der Verstellvorrichtung bzw. den Schienen eines zweiten Fahrzeugs gleicher Bauart verbunden sind.

19. Elektro-Flurförderzeug nach Anspruch 14, 15, 16, 17 und/oder 18 **dadurch gekennzeichnet, dass** eine Fortbewegung der Fahrzeuge während des Transfers bzw. Austausches der Traktionsbatterie-Ladeeinheit nicht möglich ist.

20. Elektro-Flurförderzeug nach einem der vorgenannten Ansprüche, **dadurch gekennzeichnet, dass** wenigstens eine Reformereinheit zum Umformen eines Kraftstoffes in den Brennstoff der Brennstoffzelleneinheit und/oder eine Reinigungsvorrichtung zum Reinigen eines Reformats vorgesehen ist.

21. Elektro-Flurförderzeug nach einem der vorgenannten Ansprüche, **dadurch gekennzeichnet, dass** die Traktionsbatterie-Ladeeinheit wenigstens ein Speicherelement zum Speichern des Brennstoffs der Brennstoffzelleneinheit und/oder eines Kraftstoffs für den Reformer aufweist.

22. Elektro-Flurförderzeug nach einem der vorgenannten Ansprüche, **dadurch gekennzeichnet, dass** die Brennstoffzelleneinheit wenigstens eine Brennstoffzellensteuerung aufweist.

23. Elektro-Flurförderzeug nach einem der vorgenannten Ansprüche, **dadurch gekennzeichnet, dass** die Traktionsbatterie-Ladeeinheit wenigstens eine Kühlvorrichtung umfasst.

24. Elektro-Flurförderzeug nach einem der vorgenannten Ansprüche, **dadurch gekennzeichnet, dass** die Traktionsbatterie-Ladeeinheit wenigstens eine Heizung umfasst.

25. Elektro-Flurförderzeug nach einem der vorgenannten Ansprüche, **dadurch gekennzeichnet, dass** die Traktionsbatterie-Ladeeinheit wenigstens einen Lüfter umfasst.

26. Elektro-Flurförderzeug nach einem der vorgenannten Ansprüche, **dadurch gekennzeichnet, dass** die Traktionsbatterie-Ladeeinheit wenigstens einen Laderegler umfasst.

27. Elektro-Flurförderzeug nach einem der vorgenannten Ansprüche, **dadurch gekennzeichnet, dass** bei 20 °C Umgebungstemperatur die nominale Kapazität der Traktionsbatterie bei 5-stündiger Entladung wenigstens 40 Prozent der Energieaufnahme des elektrischen Antriebsmotors bei 5-stündigem Dauerbetrieb mit Nominalleistung beträgt.

28. Elektro-Flurförderzeug nach einem der vorgenannten Ansprüche, **dadurch gekennzeichnet, dass** bei 20 °C Umgebungstemperatur die nominale Kapazität der Traktionsbatterie bei 5-stündiger Entladung wenigstens 50 Prozent der Energieaufnahme des elektrischen Antriebsmotors bei 5-stündigem Dauerbetrieb mit Nominalleistung beträgt.

29. Elektro-Flurförderzeug nach einem der vorgenannten Ansprüche, **dadurch gekennzeichnet, dass** bei 20 °C Umgebungstemperatur die nominale Kapazität der Traktionsbatterie bei 5-stündiger Entladung wenigstens 60 Prozent der Energieaufnahme des elektrischen Antriebsmotors bei 5-stündigem Dauerbetrieb mit Nominalleistung beträgt.

30. Verfahren zum Betrieb von mindestens zwei Elektro-Flurförderzeugen nach einem der vorgenannten Ansprüche, **dadurch gekennzeichnet, dass** eine gemeinsame, sequentielle bzw. konsekutive Nutzung der Traktionsbatterie-Ladeeinheiten durch einen Transfer zwischen den Fahrzeugen möglich ist.

31. Verfahren nach Anspruch 30, **dadurch gekennzeichnet, dass** die Koordination des Austausches der Traktionsbatterie-Ladeeinheiten auf Grundlage von fahrzeugbezogenen Telemetriedaten und /oder Positionsdaten und/oder unter Berücksichtigung der aktuellen Fahraufträge der Fahrer bzw. Fahrzeuge erfolgt.

32. Verfahren nach Anspruch 30 und/oder 31, **dadurch gekennzeichnet, dass** der Austausch der Traktionsbatterie-Ladeeinheiten durch einen zentralen Leitstand koordiniert wird.

33. Verfahren nach Anspruch 30, 31 und/oder 32, **dadurch gekennzeichnet, dass** die Zahl der für eine Flotte von Elektro-Flurförderzeugen vorgehaltenen mobilen Traktionsbatterie-Ladeeinheiten geringer ist, als die Zahl Fahrzeuge.
